# EUROPEAN PATENT APPLICATION

(11) **EP 2 863 535 A1**
(43) Date of publication of application: **22.04.2015**
(21) Application number: 14180775.0
(22) Date of filing: 13.08.2014
(51) Int. Cl.: H02P 1/32

(54) **Starter and starting method of compressor**

(30) Priority: 15.10.2013 JP 2013214609
(71) Applicant: Kabushiki Kaisha Kobe Seiko Sho (Kobe Steel, Ltd.), Kobe-shi, Hyogo 651-8585 (JP)
(72) Inventor: Yamaguchi, Motonari, Kako-gun,, Hyogo 675-0155 (JP); Kuroda, Kenji, Kako-gun,, Hyogo 675-0155 (JP); Okuto, Takuya, Kako-gun,, Hyogo 675-0155 (JP)
(74) Representative: TBK

(57) **Abstract**

The present invention enables a time for which a current is supplied to an electric motor by a star connection to be set to be an appropriate time for each temperature, thereby optimizing a start-up time of the electric motor. A starter of an air compressor which includes a compressor body which includes a suction port and a discharge port; an oil collector which separates oil contained in compressed gas and collects the oil; an oil supply line which supplies the oil of the oil collector to the compressor body; and an electric motor which drives the compressor body, includes: a star-delta circuit which is able to change a connection of each of layers of a primary winding of the electric motor from a star connection to a delta connection; a temperature measurement unit which measures a temperature of oil that lubricates the compressor body; and a control unit which derives a star time, which is a time for which a current is supplied to the electric motor by the star connection, based on the temperature of the oil measured by the temperature measurement unit and allows the star-delta circuit to change over from the star connection to the delta connection when the star time has elapsed.

## Description

### BACKGROUND OF THE INVENTION

### (FIELD OF THE INVENTION)

The present invention relates to a starter and a starting method of a compressor, and more particularly, to a star-delta type starter and starting method.

### (DESCRIPTION OF THE RELATED ART)

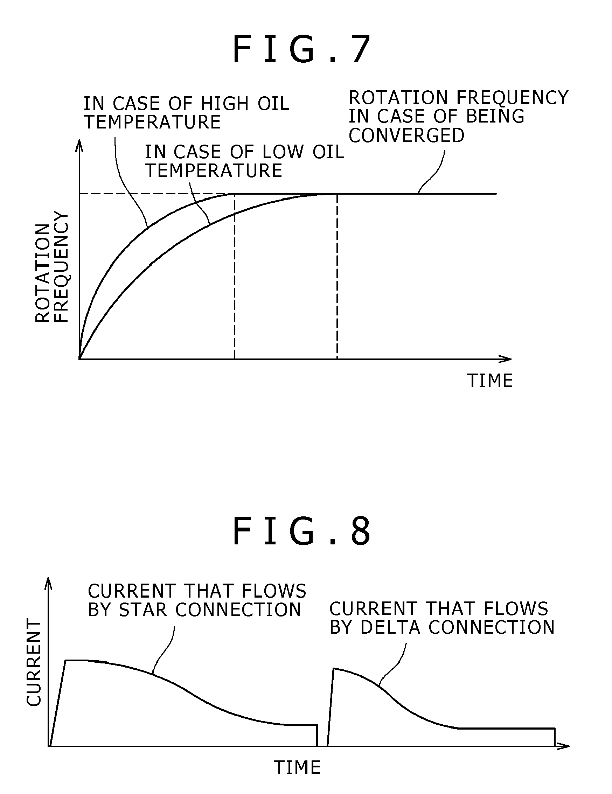

Hitherto, in a star-delta type starter, a star time for which a current flows by a star connection is associated with a time at which a current value converges. This is because, as illustrated in FIG. 8, at a timing of a changeover to a delta connection, a current having a value that is two or three times the current value immediately before the timing flows. That is, when the star connection is changed to the delta connection in a state where the current value does not converge, a high current tries to flow into an electric motor, and thus there is a concern that a compressor may be stopped by an overcurrent breaker. In addition, in a worst case, the load of the electric motor increases, resulting in a breakdown of the electric motor.

As factors that influence the time at which the current value converges, for example, outside air temperature, the temperature of lubricating oil, a voltage or a frequency input to the electric motor, and the like is considered. Therefore, among the factors, based on a start-up time of the electric motor at a low temperature and a low voltage at which the convergence time of the current value increases, the star times under all conditions are set to be the same time.

However, when the star times under all conditions are set to be the same time based on the start-up time at a low temperature and a low voltage, the start-up time is not appropriate for various environment conditions, and the fixed start-up time is always needed. Accordingly, a time for the rotation frequency of the electric motor to be stabilized (the time at which the current value converges) varies with temperature, and even in a case where the rotation frequency becomes stable within a short time, for example, at a high temperature, it takes time to start up.

Furthermore, in the case of an unexpectedly low temperature, start-up is not possible, and an operator does not know whether or not the start-up of the electric motor can be completed (whether or not the electric motor reaches a steady operation).

In JP 2008-144602 A, a starter of a screw compressor which measures the number of rotation of a motor or a current value of the motor while starting by star connection and performs control of delta starting when the value becomes a certain value for optimization of the start-up time is described.

However, in a starter described in JP 2008-144602 A, an operator does not know whether or not the start-up of an electric motor can be actually completed from various temperatures (outside air temperature, oil temperature, and the like). In addition, a device for detecting the rotation frequency of a motor, such as a rotary encoder, or a current detecting unit for detecting the current value of the motor is necessary, and thus manufacturing cost increases to mount the devices.

### SUMMARY OF THE INVENTION

The present invention enables a determination of whether or not start-up can be actually completed, by a temperature (outside air temperature, oil temperature, and the like). In a case where start-up is possible, a star time is set to an appropriate time for each temperature, thereby optimizing the start-up time of an electric motor and a discharge air supply time. Although a temperature or the like in an oil collector needs to be measured for control of the optimization, the temperature in the oil collector is measured by general control in most products as air compressors, and thus manufacturing cost is not increased.

According to the present invention, a starter of a compressor which includes a compressor body which includes a suction port that suctions a gas and a discharge port that discharges the gas which is suctioned from the suction port and is compressed, an oil collector which separates oil contained in the gas compressed by the compressor body and collects the oil, an oil supply line which supplies the oil collected in the oil collector to the compressor body, and an electric motor which drives the compressor body, includes: a star-delta circuit which is able to change a connection of each of layers of a primary winding of the electric motor from a star connection to a delta connection and supplies a current to the electric motor; a temperature measurement unit which measures a temperature of oil that lubricates the compressor body; and a control unit which derives a star time, which is a time for which a current is supplied to the electric motor by the star connection, based on the temperature of the oil measured by the temperature measurement unit during start-up of the electric motor and allows the star-delta circuit to change over from the star connection to the delta connection when the star time has elapsed.

Since the time for which a current is supplied to the electric motor by the star connection is set to be an appropriate time for the temperature of the oil, a start-up time of the electric motor by the delta connection and a discharge air supply time can be optimized.

As a specific embodiment, for example, the temperature measurement unit may be an oil supply line temperature sensor which measures a temperature of the oil supply line.

As another embodiment, for example, the temperature measurement unit may be a collector temperature measurement sensor which measures a temperature of the oil in the oil collector.

In most compressors, the temperature of the oil in the oil collector is measured by general control. Therefore, there is no need to add a component to the compressor, which prevents an increase in manufacturing cost.

It is preferable that the control unit calculate a discharge air supply time, which is a time until a pressure of the gas discharged from the compressor body reaches a predetermined pressure from start of supply of the current to the electric motor, based on the star time, and include a display unit which displays the discharge air supply time.

It is preferable that a display unit which informs a user that the electric motor is not able to be started, when the temperature of the oil measured by the temperature measurement unit is lower than an operable temperature of the electric motor be further provided.

According to the above configuration, a user knows the situation in which the electric motor of the compressor cannot be started.

It is preferable that the compressor include a heating unit which heats the oil collector, and the control unit allow the heating unit to heat the oil collector when the temperature of the oil measured by the temperature measurement unit is lower than the operable temperature of the electric motor and the electric motor is not able to be started, and stop the heating unit when the temperature of the oil is equal to or higher than the operable temperature of the electric motor.

According to the above configuration, even in a cold region where the compressor cannot be started at a low temperature, the compressor can be operated by stating up the electric motor at an appropriate time for the temperature of the oil.

It is preferable that the compressor include a current value measurement unit which measures a current value supplied to the electric motor, and the control unit allow the star-delta circuit to change over from the star connection to the delta connection at an earlier timing among a timing at which the current value measured by the current value measurement unit reaches a predetermined current value in the case of being converged or a timing at which the star time elapses.

According to the above configuration, since the star time is determined in advance depending on the temperature of the oil and the changeover to the delta connection is possible even at the timing of detecting the convergence of the current value, the start-up time of the electric motor and the discharge air supply time can be further optimized.

It is preferable that the compressor include a rotation frequency measurement unit which measures a rotation frequency of the electric motor, and the control unit allow the star-delta circuit to change over from the star connection to the delta connection at an earlier timing among a timing at which the rotation frequency measured by the rotation frequency measurement unit reaches a predetermined rotation frequency in the case of being converged or a timing at which the star time elapses.

According to the above configuration, since the star time is determined in advance depending on the temperature of the oil and the changeover to the delta connection is possible even at the timing of detecting the convergence of the rotation frequency, the start-up time of the electric motor and the discharge air supply time can be further optimized.

It is preferable that a starting method of a compressor which includes a compressor body which includes a suction port that suctions a gas and a discharge port that discharges the gas which is suctioned from the suction port and is compressed, an electric motor which drives the compressor body, and a star-delta circuit which is able to change a connection of each of layers of a primary winding of the electric motor from a star connection to a delta connection and supplies a current to the electric motor, include: measuring a temperature of oil that lubricates the compressor body; and deriving a star time, which is a time for which a current is supplied to the electric motor by the star connection, based on the temperature of the oil measured by a temperature measurement unit during start-up of the electric motor and allowing the star-delta circuit to change over from the star connection to the delta connection when the star time has elapsed.

According to the present invention, by setting the star time to an appropriate time for the temperature of the oil, the start-up time of the electric motor by the delta connection and the discharge air supply time can be optimized.

### BRIEF DESCRIPTION OF THE DRAWINGS

FIG. 1 is a schematic diagram and a block diagram of an air compressor provided with a starter according to a first embodiment of the present invention.
FIG. 2 is a flowchart for starting an electric motor of FIG. 1.
FIG. 3 is a schematic diagram and a block diagram of an air compressor provided with a starter according to a second embodiment of the present invention.
FIG. 4 is a flowchart for starting an electric motor of FIG. 3.
FIG. 5 is a flowchart according to a modification example for starting the electric motor of the embodiment of the present invention.
FIG. 6 is a flowchart according to another modification example for starting the electric motor of the embodiment of the present invention.
FIG. 7 is a graph illustrating a time for the rotation frequency of the electric motor to converge.
FIG. 8 is a graph illustrating the relationship between a current flowing through a start connection, a current flowing through a delta connection, and time.

### DESCRIPTION OF THE PREFERRED EMBODIMENTS

Hereinafter, an embodiment of the present invention will be described with reference to the accompanying drawings.

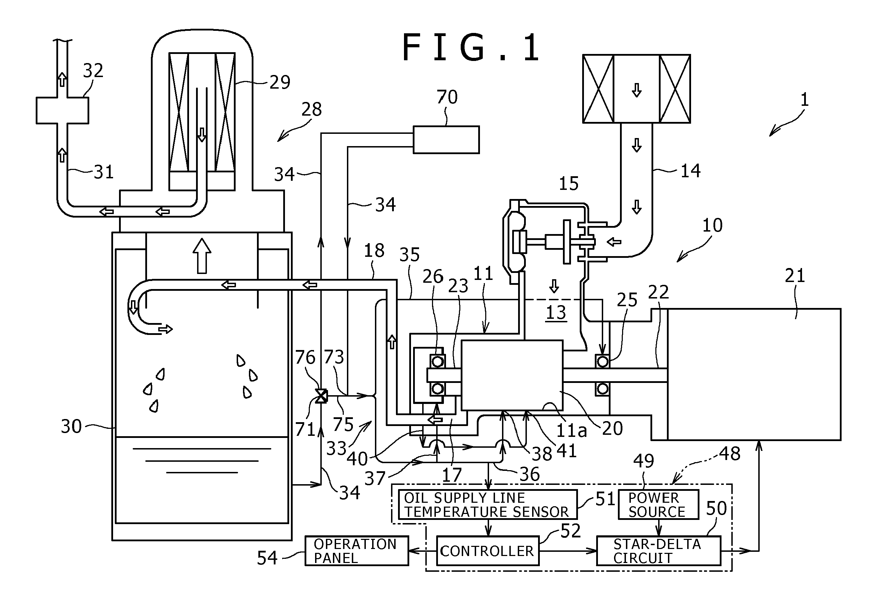

FIG. 1 illustrates an air compressor 1 provided with a starter 48 according to a first embodiment of the present invention. The compressor of the present invention is a screw type air compressor 1, and is lubricated and cooled by oil that flows through the inside of the compressor. As illustrated in FIG. 1, the air compressor 1 includes a compressor body 10 and an oil collector 28.

The compressor body 10 includes a rotor casing 11 which accommodates a screw rotor 20 which will be described later in a rotor chamber 11a provided in the rotor casing 11. The compressor body 10 includes a suction port 13 which suctions a gas from the outside and a discharge port 17 which discharges the gas.

In a suction channel 14 which is connected to the suction port 13, a suction adjustment valve 15 which adjusts the flow rate of the gas that passes through the suction channel 14 is provided so that the flow rate of the suctioned gas is adjusted by adjusting the opening degree of the suction adjustment valve 15. During a load operation of the air compressor 1, the opening degree of the suction adjustment valve 15 is maximized so as to suction a gas. A discharge channel 18 which is connected to the discharge port 17 communicates with the discharge port 17 of the compressor body 10 and the oil collector 28.

The screw rotor 20 is configured to include male and female rotors which form a pair, and one rotor is connected to a motor shaft 22 of an electric motor 21 attached to the rotor casing 11. The motor shaft 22 is supported by a suction side bearing 25 which is provided in the rotor casing 11. A rotating shaft 23 on the discharge side of the screw rotor 20 is supported by a discharge side bearing 26 which is provided in the rotor casing 11.

As the screw rotor 20 is rotated by the electric motor 21, the gas supplied from the suction channel 14 via the suction port 13 is compressed by the screw rotor 20, and is discharged as a high-pressure gas to the discharge channel 18 via the discharge port 17. In addition, the screw rotor 20 is operated at a constant rotation frequency in a normal operation.

The oil collector 28 includes an oil separation element 29 which separates oil from the compressed gas that contains an oil content that flows from the discharge channel 18, and an oil reservoir 30 in which the oil that is separated by the oil separation element 29 and drops under its own weight is accumulated. The compressed gas from which the oil is separated passes from a supply pipe 31 that communicates with the oil separation element 29 through an air cooler 32 to be adjusted to a desired temperature and is supplied to a gas supply destination (not illustrated). In addition, the oil collected in the oil reservoir 30 is guided into the rotor casing 11 through an oil channel 33 that allows the oil reservoir 30 and the compressor body 10 to communicate with each other.

The oil channel 33 includes an oil supply line 34 and an oil moving line 40. One end of the oil supply line 34 communicates with the oil collector 28, and the other end side thereof branches off to three sub oil supply lines 35, 36, and 37. The end portion of the first sub oil supply line 35 communicates with a housing which accommodates the suction side bearing 25. The end portion of the second sub oil supply line 36 communicates with the inside of the rotor chamber 11a via an oil inflow port 38 which is provided in the rotor chamber 11a corresponding to the substantially center portion of the screw rotor 20 in the axial direction. The end portion of the third sub oil supply line 37 communicates with a housing which accommodates the discharge side bearing 26.

One end of the oil moving line 40 communicates with the housing which accommodates the discharge side bearing 26, and the other end thereof communicates with the inside of the rotor chamber 11a via a communication port 41 provided in the vicinity of the oil inflow port 38.

In the oil supply line 34 of the embodiment of the present invention, an oil cooler 70 is provided to prevent the temperature of the oil (oil supply temperature) from increasing during the normal operation after starting the compressor. In addition, a bypass line 75 which connects a branch point 71 on the upstream side of the oil cooler 70 to a junction point 73 on the downstream side thereof is connected to the oil supply line 34. Moreover, at least one valve unit to change the amount of oil flowing through the oil supply line 34 and the amount of oil flowing through the bypass line 75 between the branch point 71 and the junction point 73 is provided. In this embodiment, the valve unit is formed as a three-way valve 76 which is disposed to the branch point 71. During the start-up of the air compressor 1 according to the present invention, in other words, during the start-up (star start-up) of the electric motor 21, the three-way valve 76 is operated so that the oil flows through the bypass line 75 (the ratio of the amount of oil flowing to the bypass line side is substantially 100%) and is allowed to avoid the oil supply line 34 (the ratio of the amount of oil flowing to the oil supply line side is substantially 0%). Here, the three-way valve 76 is operated so that the oil flows through the oil supply line 34 during the normal operation.

The configuration, the number, and the installation position of the valve unit are not particularly limited as long as the valve unit can change the amount of oil supplied to the rotor chamber 11a via the oil cooler 70 and the amount of oil that is supplied without passing through the oil cooler 70. For example, the three-way valve may be provided in the junction point 73 instead of the branch point 71. In addition, the valve unit may be configured to include a three-way valve and an electromagnetic valve (not illustrated) which adjusts the amount of oil flowing through the oil supply line 34 between the branch point 71 and the junction point 73. Instead of the three-way valve, on-off valves such as an electromagnetic on-off valve may be respectively provided in the oil supply line 34 and the bypass line 75 between the branch point 71 and the junction point 73. Even in the case of using the on-off valve, during the start-up of the air compressor 1 according to the present invention, each of the on-off valves is operated so that the oil flows through the bypass line 75 and is allowed to avoid the oil supply line 34. That is, during the start-up (star start-up) of the electric motor 21, the on-off valve of the bypass line 75 enters an open state, and the on-off valve of the oil supply line 34 enters a closed state.

The starter 48 is connected to the compressor body 10 and an operation panel (display unit) 54 is connected the compressor body 10 via the starter 48. The starter 48 includes a power source 49, a star-delta circuit 50, an oil supply line temperature sensor (temperature measurement unit) 51, and a controller (control unit) 52.

The star-delta circuit 50 is connected to the power source 49, the controller 52, and the electric motor 21. The star-delta circuit 50 supplies power from the power source 49 to the electric motor 21. In addition, the star-delta circuit 50 starts up (star start-up) the electric motor 21 in a star connection by a signal from an operation switch (not illustrated), and changes the connection of each of phases of the electric motor 21 from the star connection (star start-up state) to a delta connection (delta start-up state) based on a signal from the controller 52.

The oil supply line temperature sensor 51 is mounted in the second sub oil supply line 36 to measure the temperature of the second sub oil supply line 36. In this embodiment, the oil supply line temperature sensor 51 is mounted in the second sub oil supply line 36, but is not limited thereto as long as it can measure the temperature of the oil supply line. The oil supply line temperature sensor 51 may be mounted, for example, in the first sub oil supply line 35 or the third sub oil supply line 37. Since the oil circulates through the insides of the sub oil supply lines 35, 36, and 37, the temperature of the oil is indirectly measured by the oil supply line temperature sensor 51.

The controller 52 connected to the oil supply line temperature sensor 51 determines whether or not the electric motor 21 can be started up (delta start-up) based on the temperature of the second sub oil supply line 36 measured by the oil supply line temperature sensor 51, and in a case where start-up is not possible, transmits a signal indicating this case to the operation panel 54. In addition, the controller 52 transmits a signal indicating a changeover from the star connection to the delta connection to the star-delta circuit 50 based on the temperature of the second sub oil supply line 36 measured by the oil supply line temperature sensor 51. Furthermore, the controller 52 calculates a discharge air supply time, and transmits the calculated value to the operation panel 54. The discharge air supply time is a time from the start of the supply of current to the electric motor 21 until the pressure of the gas discharged from the compressor body 10 reaches a predetermined pressure, the time being calculated based on the star time which will be described later.

The operation panel 54 is a well-known panel having a segment display type liquid crystal panel which is disposed at the center. The operation panel 54 is connected to the controller 52, displays an error indicating that the electric motor 21 cannot be started, based on the signal from the controller 52, and displays the discharge air supply time.

Hereinafter, a lubrication path of the oil which lubricates the inside of the compressor body 10 will be described.

The oil which is separated from the compressed gas and is collected in the oil reservoir 30 is supplied to the compressor body 10 via the oil supply line 34. The oil which is guided from the oil supply line 34 to the first sub oil supply line 35 is supplied to the suction side bearing 25. The oil which is guided from the oil supply line 34 to the second sub oil supply line 36 is supplied to the rotor chamber 11a via the oil inflow port 38. The oil which is guided from the oil supply line 34 to the third sub oil supply line 37 is supplied to the discharge side bearing 26.

The oil which is supplied to the discharge side bearing 26 and is cooled by lubricating the discharge side bearing 26 is guided to the oil moving line 40 and is supplied to the rotor chamber 11a via the communication port 41. The oil which is supplied to the rotor chamber 11a and is cooled by lubricating the rotor chamber 11a and the oil which is supplied to the suction side bearing 25 and is cooled by lubricating the suction side bearing 25 are guided to the oil separation element 29 from the discharge port 17 via the discharge channel 18 along with the compressed gas. The oil which is trapped in the oil separation element 29 drops down and returns to the oil reservoir 30.

Next, the operation of the electric motor 21 will be described. Since the steady operation of the electric motor 21 is well-known in the related art, the description thereof is not provided, and only a starting operation will be described.

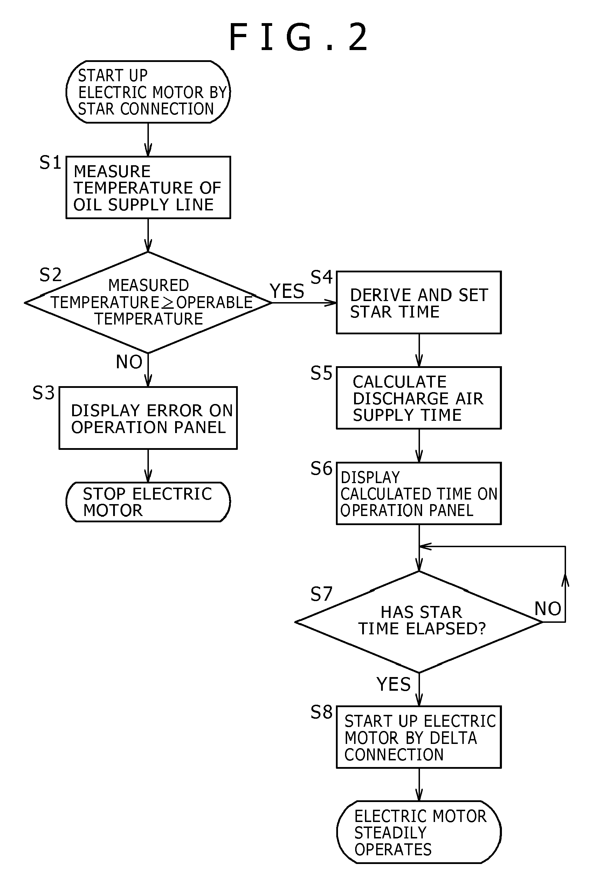

First, as illustrated in the flowchart of FIG. 2, the operation switch (not illustrated) is turned on to start up the electric motor 21 by the star connection. In Step S1, the temperature of the second sub oil supply line 36 is measured by the oil supply line temperature sensor 51. In Step S2, the controller 52 determines whether or not the measured temperature of the second sub oil supply line 36 is equal to or higher than a temperature (operable temperature set in advance) at which the electric motor 21 can be started and operated. When the temperature of the second sub oil supply line 36 is lower than the operable temperature, the starting operation proceeds to Step S3, and an error indicating that the electric motor 21 cannot be operated is displayed on the operation panel 54 by the signal from the controller 52. Accordingly, a user knows the situation in which the electric motor 21 of the air compressor 1 cannot be started. In addition, the electric motor 21 stops.

When the temperature of the second sub oil supply line 36 is equal to or higher than the operable temperature of the electric motor 21, the starting operation proceeds to Step S4. In Step S4, the controller 52 derives and sets a time (star time) for which current is supplied to the electric motor 21 by the star connection, that is, a time for a changeover from the star connection to the delta connection, based on the temperature of the second sub oil supply line 36. In the first embodiment, the star time is derived from the relationship between the temperature of the oil supplied to the compressor, which is set in advance, and the star time. The star time is set so that the star time is short when the temperature of the second sub oil supply line 36, that is, the temperature of the oil is high, and the star time is long when the temperature of the second sub oil supply line 36 is low.

Thereafter, the starting operation proceeds to Step S5, and the controller 52 calculates the discharge air supply time. In Step S6, by the signal from the controller 52, a time for which the start-up of the electric motor 21 continues by the star connection and the discharge air supply time are displayed on the operation panel 54. In Step S7, the controller 52 measures whether or not the star time has elapsed. The starting operation is on standby when the star time has not elapsed. When the star time has elapsed, the starting operation proceeds to Step S8, the star-delta circuit 50 changes over from the star connection to the delta connection by the signal from the controller 52 and starts up the electric motor 21 to proceed to the steady operation.

As described above, the star time is set to be an appropriate time depending on the temperature of the oil, and thus the start-up time of the electric motor 21 by the delta connection and the discharge air supply time can be optimized.

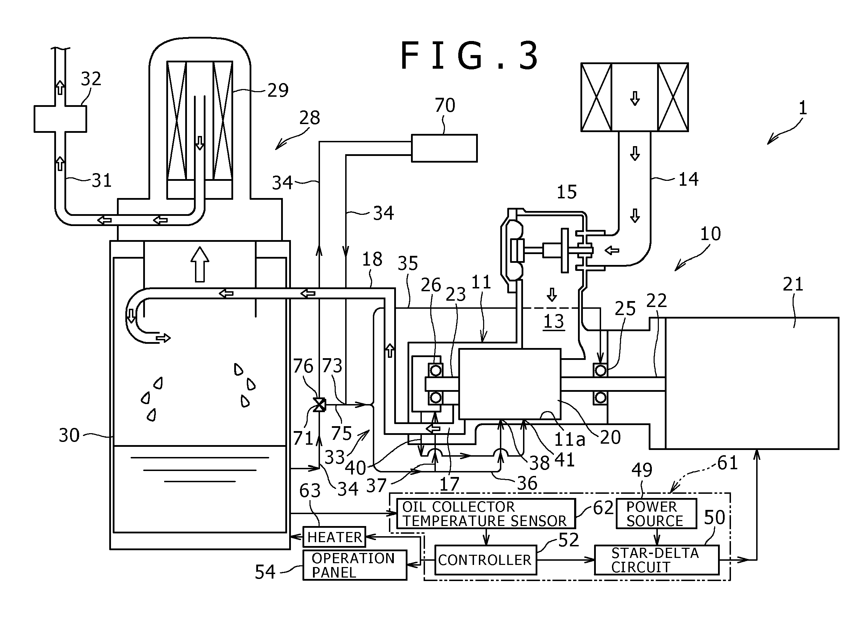

In FIG. 3, an air compressor 1 provided with a starter 61 according to a second embodiment of the present invention is illustrated. Like elements as those of the first embodiment of FIG. 1 are denoted by like reference numerals, and the description thereof will be not provided.

A starter 61 includes an oil collector temperature sensor 62 which is connected to the controller 52. The oil collector temperature sensor 62 is mounted in the oil collector 28 to measure the temperature of the oil collected in the oil reservoir 30. Here, in most compressors, the temperature of the oil in the oil collector 28 is measured for general control. Therefore, there is no need to add a new oil collector temperature sensor 62 to control the starter 61, which prevents an increase in manufacturing cost. The oil reservoir 30 includes a collector heater (heating unit) 63, and the oil reservoir 30 is heated by the collector heater 63. The collector heater 63 is connected to the controller 52.

Next, the starting operation of the electric motor 21 will be described.

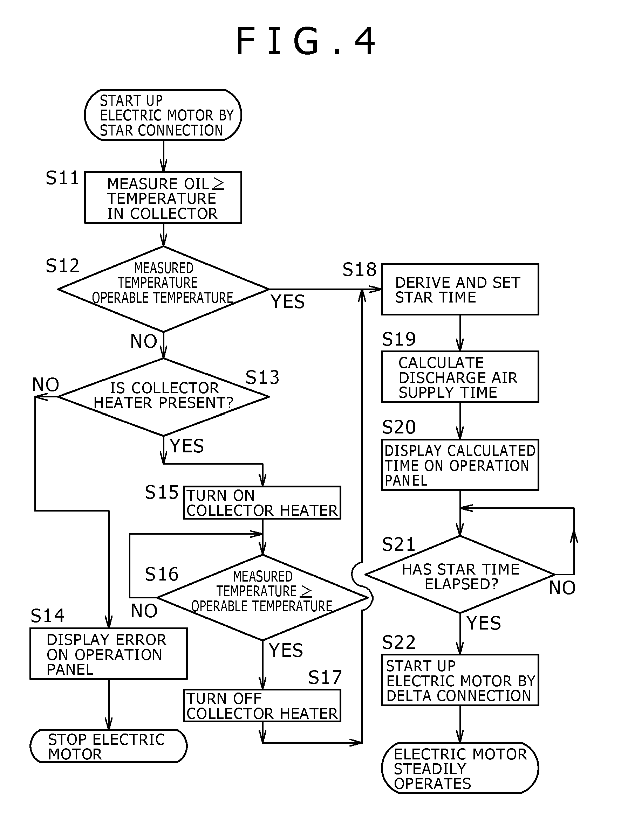

First, as illustrated in the flowchart of FIG. 4, the operation switch (not illustrated) is turned on to start up the electric motor 21 by the star connection. In Step S11, the temperature of the oil collected in the oil reservoir 30 (the oil collector 28) is measured by the oil collector temperature sensor 62.

In Step S12, the controller 52 determines whether or not the measured temperature of the oil is equal to or higher than a temperature at which the electric motor 21 can be started and operated. When the temperature of the oil is lower than the operable temperature, the starting operation proceeds to Step S13, and the controller 52 determines whether the collector heater 63 is mounted in the oil collector 28 by detecting whether or not the collector heater 63 is connected. In the second embodiment, the configuration in which the oil collector 28 includes the collector heater 63 is described. However, in a case where mounting the collector heater 63 is forgotten, the starting operation proceeds to Step S14 recognizing that the collector heater 63 is not mounted. In Step S14, an error indicating that the electric motor 21 cannot be operated is displayed on the operation panel 54 by the signal from the controller 52. In addition, the electric motor 21 stops.

In a case where the collector heater 63 is mounted in the oil collector 28, the starting operation proceeds to Step S15, and the controller 52 turns on the power source of the collector heater 63. In Step S16, the temperature of the oil collected in the oil reservoir 30 is measured again by the oil collector temperature sensor 62, and the controller 52 determines whether the measured temperature is equal to or higher than the temperature at which the electric motor 21 can be operated. When the measured temperature is lower than the temperature at which the electric motor 21 can be operated, the starting operation is on standby.

When the measured temperature is equal to or higher than the temperature at which the electric motor 21 can be operated, the starting operation proceeds to Step S17, and the controller 52 turns off the power source of the collector heater 63. Subsequently, as in the case where the controller 52 in Step S12 determines that the measured temperature of the oil is equal to or higher than the temperature at which the electric motor 21 can be operated, the starting operation proceeds to Step S18. In Step S18, the controller 52 derives and sets a time the star time, that is, a time for a changeover from the star connection to the delta connection, based on the temperature of the oil in the oil collector 28. In the second embodiment, the deriving and setting of the star time is performed in the same manner as in the first embodiment.

The starting operation proceeds to Step S19. The flow from Step S19 to Step S22 is the same as the flow from Step S5 to Step S8 of the first embodiment of FIG. 2, and thus the description thereof will be not provided. As described above, since the collector heater 63 is mounted in the oil collector 28, even in a cold region where the air compressor 1 cannot be started at a low temperature, the air compressor 1 can be operated by stating up the electric motor 21 at an appropriate time for the temperature of the oil.

The present invention is not limited to the above-described embodiments and various modifications can be made.

In the first embodiment, the temperature of the second sub oil supply line 36 is measured and based on the temperature, the time for a changeover from the star connection to the delta connection is derived. However, the present invention is not limited thereto.

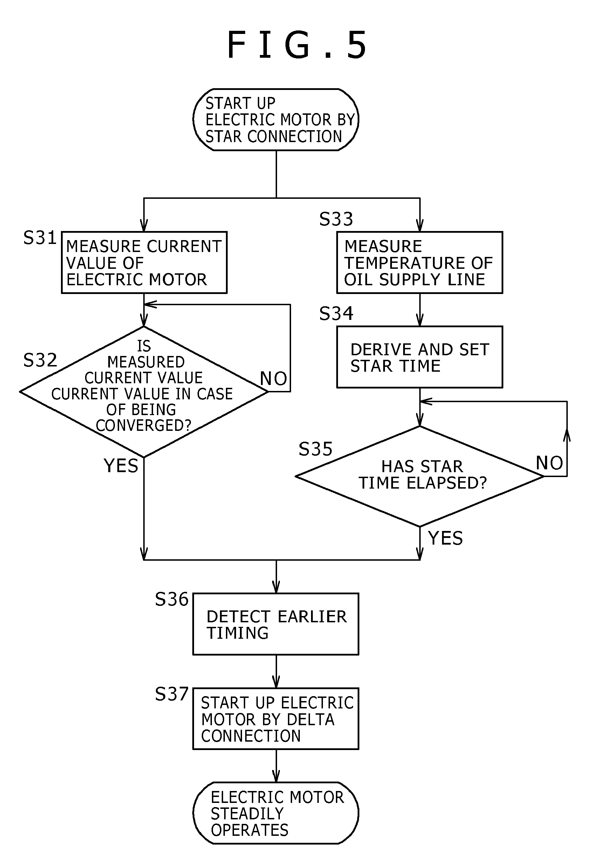

For example, a well-known current measurement unit (not illustrated) which measures a current value supplied to the electric motor 21 may be provided in the starter 48 of the first embodiment. In addition, as illustrated in the flowchart of FIG. 5 according to a modification example, the operation switch (not illustrated) is turned on to start up the electric motor 21 by the star connection. In Step S31, the current value supplied to the electric motor 21 is measured by the current measurement unit. Then, the starting operation proceeds to Step S32, and the controller 52 determines whether or not the measured current value is a current value in the case of being converged. When the current value is not the current value in the case of being converged, the starting operation is on standby. When the current value is the current value in the case of being converged, the starting operation proceeds to Step S35.

The starting operation proceeds to Step S33 at the same time as Step S31 so that the temperature of the second sub oil supply line 36 is measured by the oil supply line temperature sensor 51. Thereafter, the starting operation proceeds to Step S34. In Step S34, the controller 52 derives and sets the star time based on the temperature of the second sub oil supply line 36. The deriving and setting of the star time in the modification example is performed in the same manner as in the first embodiment. In Step S35, the controller 52 measures whether or not the star time has elapsed. When the star time has not elapsed, the starting operation is on standby. When the star time has elapsed, the starting operation proceeds to Step S36.

In Step S36, among a timing at which the current value becomes the current value in the case of being converged in Step S32 and a timing at which the star time elapses in Step S35, the controller 52 detects an earlier timing, and the starting operation proceeds to Step S37. In Step S37, the star-delta circuit 50 changes over from the star connection to the delta connection by the signal from the controller 52 and starts up the electric motor 21 to proceed to the steady operation. As factors that influence the time for the current value to converge, there are temperatures such as outside air temperature and the temperature of the oil, a voltage input to the electric motor 21, a frequency, and the like.

As described above, since the star time is determined in advance depending on the temperature of the second sub oil supply line 36 and the changeover to the delta connection is possible even at the timing of detecting the convergence of the current value, the start-up time and the discharge air supply time can be further optimized.

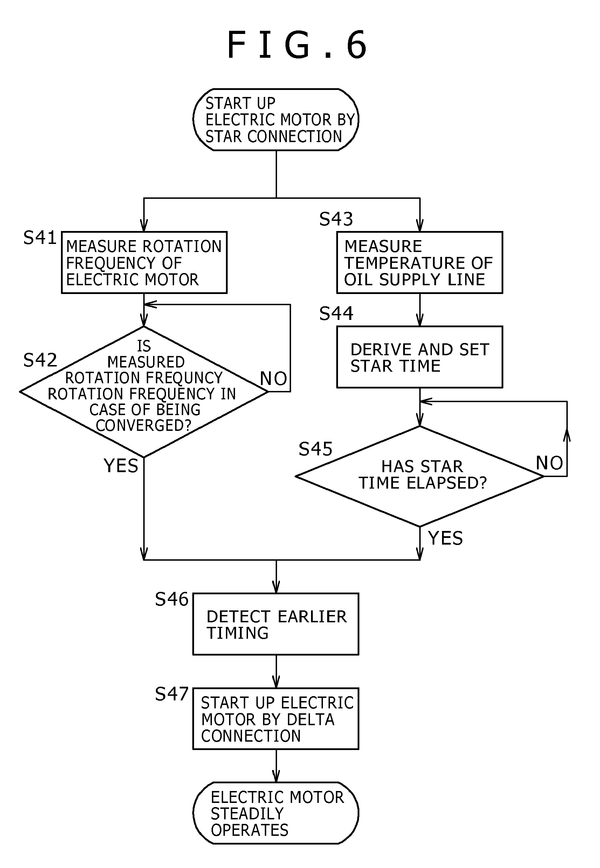

As another modification example, a well-known rotation frequency measurement unit (not illustrated) which measures the rotation frequency of the electric motor 21 may be provided in the starter 48 of the first embodiment. As illustrated in the flowchart of FIG. 6 according to this modification example, the operation switch (not illustrated) is turned on to start up the electric motor 21 by the star connection. In Step S41, the rotation frequency of the electric motor 21 is measured by the rotation frequency measurement unit. The starting operation then proceeds to Step S42, and the controller 52 determines whether or not the measured rotation frequency is a rotation frequency in the case of being converged. When the rotation frequency is not the rotation frequency in the case of being converged, the starting operation is on standby. When the rotation frequency is the rotation frequency in the case of being converged, the starting operation proceeds to Step S46.

The starting operation proceeds to Step S43 at the same time as Step S41 so that the temperature of the second sub oil supply line 36 is measured by the oil supply line temperature sensor 51. Thereafter, the starting operation proceeds to Step S44. In Step S44, the controller 52 derives and sets the star time based on the temperature of the second sub oil supply line 36. The deriving and setting of the star time in this modification example is performed in the same manner as in the first embodiment. In Step S45, the controller 52 measures whether or not the star time has elapsed. When the star time has not elapsed, the starting operation is on standby. When the star time has elapsed, the starting operation proceeds to Step S46.

In Step S46, among a timing at which the rotation frequency converges in Step S42 and a timing at which the star time elapses in Step S45, the controller 52 detects an earlier timing, and the starting operation proceeds to Step S47. In Step S47, the star-delta circuit 50 changes over from the star connection to the delta connection by the signal from the controller 52 and starts up the electric motor 21 to proceed to the steady operation. The time needed for the rotation frequency to converge (time for reaching the rating) is shortened in a case where the temperature of the oil which is indirectly measured by the second sub oil supply line 36 is high, and is lengthened in a case where the temperature of the oil is low (see FIG. 7).

As described above, since the star time is determined in advance depending on the temperature of the second sub oil supply line 36 and the changeover to the delta connection is possible even at the timing of detecting the convergence of the rotation frequency, the start-up time and the discharge air supply time can be further optimized.

The star time in the present invention may be obtained by determining in advance the relationship between the temperature of the oil supplied to the compressor and the star time as in the above-described embodiments and modification examples and deriving a value (star time) that uniquely corresponds to the temperature of the oil, or may also be obtained by mathematizing the relationship between the temperature of the oil supplied to the compressor and the star time and deriving (calculating) a uniquely corresponding value (star time) from the mathematical expression having the temperature of the oil as a parameter.

## Claims

1. A starter of a compressor which includes
a compressor body which includes a suction port that suctions a gas and a discharge port that discharges the gas which is suctioned from the suction port and is compressed,
an oil collector which separates oil contained in the gas compressed by the compressor body and collects the oil,
an oil supply line which supplies the oil collected in the oil collector to the compressor body, and
an electric motor which drives the compressor body,
the starter comprising:
a star-delta circuit which is able to change a connection of each of layers of a primary winding of the electric motor from a star connection to a delta connection and supplies a current to the electric motor;
a temperature measurement unit which measures a temperature of oil that lubricates the compressor body; and
a control unit which derives a star time, which is a time for which a current is supplied to the electric motor by the star connection, based on the temperature of the oil measured by the temperature measurement unit during start-up of the electric motor and allows the star-delta circuit to change over from the star connection to the delta connection when the star time has elapsed.

2. The starter of a compressor according to claim 1,
wherein the temperature measurement unit is an oil supply line temperature sensor which measures a temperature of the oil supply line.

3. The starter of a compressor according to claim 1,
wherein the temperature measurement unit is an oil collector temperature sensor which measures a temperature of the oil in the oil collector.

4. The starter of a compressor according to any one of claims 1 to 3,
wherein the control unit calculates a discharge air supply time, which is a time until a pressure of the gas discharged from the compressor body reaches a predetermined pressure from start of supply of the current to the electric motor, based on the star time, and includes a display unit which displays the discharge air supply time.

5. The starter of a compressor according to any one of claims 1 to 4, further comprising:
a display unit which informs a user that the electric motor is not able to be started, when the temperature of the oil measured by the temperature measurement unit is lower than an operable temperature of the electric motor.

6. The starter of a compressor according to any one of claims 1 to 5,
wherein the compressor includes a heating unit which heats the oil collector, and
the control unit allows the heating unit to heat the oil collector when the temperature of the oil measured by the temperature measurement unit is lower than the operable temperature of the electric motor and the electric motor is not able to be started, and stops the heating unit when the temperature of the oil is equal to or higher than the operable temperature of the electric motor.

7. The starter of a compressor according to any one of claims 1 to 5,
wherein the compressor includes a current value measurement unit which measures a current value supplied to the electric motor, and
the control unit allows the star-delta circuit to change over from the star connection to the delta connection at an earlier timing among a timing at which the current value measured by the current value measurement unit reaches a predetermined current value in the case of being converged or a timing at which the star time elapses.

8. The starter of a compressor according to any one of claims 1 to 5,
wherein the compressor includes a rotation frequency measurement unit which measures a rotation frequency of the electric motor, and
the control unit allows the star-delta circuit to change over from the star connection to the delta connection at an earlier timing among a timing at which the rotation frequency measured by the rotation frequency measurement unit reaches a predetermined rotation frequency in the case of being converged or a timing at which the star time elapses.

9. A starting method of a compressor which includes
a compressor body which includes a suction port that suctions a gas and a discharge port that discharges the gas which is suctioned from the suction port and is compressed,
an electric motor which drives the compressor body, and
a star-delta circuit which is able to change a connection of each of layers of a primary winding of the electric motor from a star connection to a delta connection and supplies a current to the electric motor,
the starting method comprising:
measuring a temperature of oil that lubricates the compressor body; and
deriving a star time, which is a time for which a current is supplied to the electric motor by the star connection, based on the temperature of the oil measured by a temperature measurement unit during start-up of the electric motor and allowing the star-delta circuit to change over from the star connection to the delta connection when the star time has elapsed.
